Europäisches Patentamt

European Patent Office

Office européen des brevets

(19)

Publication number: **0 294 588**
**A2**

# EUROPEAN PATENT APPLICATION

(21) Application number: 88107209.4

(51) Int. Cl.⁴ **B01D 53/04** , **B01J 20/18**

(22) Date of filing: 05.05.88

(30) Priority: 09.06.87 GB 8713405

(43) Date of publication of application:
14.12.88 Bulletin 88/50

(84) Designated Contracting States:
DE FR

(71) Applicant: LAPORTE INDUSTRIES LIMITED
3 Bedford Square
London WC1B 3RA(GB)

(72) Inventor: **Buck, Malcolm J.**
8 Coulton Road
Widnes Cheshire WA8 0DX(GB)

(74) Representative: ffrench-Lynch, Cecil et al
Laporte Industries Ltd., Group Patent
Department, P.O. Box 2, Moorfield Road
Widnes, Cheshire WA8 OJU(GB)

(54) Process for the purification of gases.

(57) Zeolite X containing strontium cations is effective in the removal of carbon dioxide from gases by selective adsorption for example from the air feed to cryogenic air separation plants. The zeolite X preferably has at least 70% of its cation exchange capacity satisfied by strontium cations and is in the form of pellets or beads.

EP 0 294 588 A2

## Process for the purification of gases

This invention relates to the purification of carbon dioxide-containing gases.

The production of pure, or relatively pure, oxygen and nitrogen by the separation of air, for example by cryogenic means, is practiced on a large industrial scale. Both materials have large scale applications in the chemical industry, the oxygen as a reagent and the nitrogen as an inert agent, which generally require high purity. Additionally, the widespread use of oxygen for life-support applications, for example in the medical field, imposes stringent purity requirements. Oxygen is widely available in a range of purities designated by Standards, for example the United States Compressed Gas Association Standards which, for example, specifies a maximum content of carbon dioxide in Grade D oxygen gas of 50 volumes per million and in Grade D oxygen liquid of 25 volumes per million.

It has been the practice in the industry to remove the carbon dioxide usually present in the a gas separation plant air feed by a preliminary purification process, for example by an adsorption process.

It has long been known that sodium zeolite X can adsorb carbon dioxide preferentially to nitrogen and oxygen. In the initial patent specification relating to the manufacture of zeolite X, United States Patent No. 2882244, data was presented to that effect which data also showed that sodium zeolite X was more effective than silica gel, or charcoal, for that purpose. The United States patent described the preparation of certain forms of zeolite X in which the sodium cation was replaced by cations of lithium, potassium, hydrogen, silver ammonium, magnesium, calcium, zinc, barium, cerium or manganese and tested the performance of certain of these forms in the adsorption of certain gases. None of these forms of zeolite X were tested for the adsorption of carbon dioxide. It was also disclosed in United States Patent No. 2882244 that the selectivity of zeolite X for a given adsorbate molecule is altered by replacement of the sodium cations by cations of other metals and that the relative selectivity between the various cationic forms changes with temperature and pressure.

There are a number of factors relevant to the selection of an adsorbent for industrial use. Industrial use is generally under dynamic conditions in which a flow of gas to be treated is maintained through the adsorbent and the performance of a given adsorbent is often different under dynamic than under static conditions.

Under given dynamic conditions factors of importance to adsorbent performance are the length of the mass transfer zone, that is the length in the direction of gas flow within which adsorption is taking place, the adsorption capacity at breakthrough, that is the weight % loading of adsorbed material on the total mass of adsorbent at the moment when the adsorbate starts to issue from the bulk of the adsorbent, and the adsorption capacity at exhaustion, that is the weight % loading of adsorbate on the total mass of adsorbent at the moment when the concentration of adsorbate leaving the bulk of the adsorbent is the same as that in the feed. For an adsorbent of given dynamic performance its density is also of importance since this determines the sizing of the adsorption plant and therefore its cost.

The Applicant has now found that a form of zeolite X hitherto untried for carbon dioxide removal from gases under dynamic conditions, namely zeolite X containing strontium cations gives a performance which can be markedly superior to that of sodium zeolite X in that application.

Zeolite X containing strontium cations has a further advantage that, strontium compounds being of relatively low toxicity and not subject to more stringent than usual handling precautions, it may be used to purify air intended for use in the production of oxygen for medical purposes without the problems and/or precautions, arising from the possible carry over of minute quantities of dust into the final product, which would be associated with the use of a relatively more potentially toxic form of zeolite X.

The present invention therefore provides a process for the removal of carbon dioxide from gases such as air or from the constituents thereof, for example from nitrogen or from oxygen, or from gases containing the said constituents comprising passing the carbon dioxide containing gas through a bed of an adsorbent capable of preferentially adsorbing the carbon dioxide characterised in that the adsorbent is zeolite X containing strontium cations.

Zeolite X containing strontium ions may be produced by ion exchange of the sodium form of zeolite X, which is available from Laporte Industries Limited as a staple commercial product or which may be manufactured by the process disclosed in United States Patent No. 2882244.

Preferably the zeolite X used as a basis for the strontium exchanged form used according to the present invention is in the form of pellets or beads. A suitable means for accomplishing this is described in United States Patent No. 2973327 according to which a damp mixture of the zeolite powder and a clay binder is extruded to form pellets which are dried and then fired at a temperature of from about 575° C to 700° C. Kaolin, attapulgite or sepiolite clays, for example may be used as binders in, for example, from 1% to 40% by weight of the clay and zeolite. Alternatively binderless pellets or beads of zeolite X, produced for example by the treatment of clay bound pellets or beads with caustic soda, may be used.

Zeolite X pellets or beads may be converted into the strontium zeolite X form by treatment with an aqueous solution of a strontium salt until the desired level of exchange of strontium cations with the sodium cations present on the zeolite, suitably from 70% to 100% exchange, has been achieved. Suitably this process is conducted by passing the solution of the strontium salt through a column packed with the zeolite pellets or beads suitably at a slightly elevated temperature of, for example 50°C to 90°C. Examples of suitable strontium salts are the chloride, nitrate, acetate and hydroxide. The aqueous solution of the strontium salt may have a concentration of for example 0.01 to 0.1 moles per litre.

After the ion exchange treatment has been completed the beads or pellets are preferably water washed and dried carefully. A suitable drying regime is 100°C to 150°C for 16 hours to 48 hours followed by 350°C to 600°C for 30 minutes to 120 minutes.

The process of the present invention may suitably be conducted by passing the carbon dioxide-containing gas, for example air through a body, such as a bed, of strontium zeolite X beads or pellets and recovering the carbon dioxide depleted air issuing from the bed. Such a process is preferably preceded by a drying step which may very suitably comprise passing the carbon dioxide-containing gas through a bed of particles of a suitable zeolite known to be effective for moisture adsorption, for example zeolite 3A (K exchanged zeolite A), at a temperature, for example, of from 10°C to 30°C.

The carbon dioxide adsorption step is preferably conducted at above ambient pressure which may suitably be at least 2 bars but preferably from 3 bars to 40 bars absolute, although lower pressures, for example below 1 bar, may be utilised. The temperature of adsorption is preferably below 20°C and possibly down to -80°C although temperatures up to 100°C may be used and the approximate range from 0°C to 10°C is particularly preferred. A suitable linear gas velocity through the bed of strontium exchanged zeolite X is at least 1 metre/minute but preferably from 5 to 50 metres per minute.

Regeneration of the carbon dioxide loaded strontium zeolite X may be accomplished by a reduction in pressure for example to from 10 mbar to 1 bar absolute at ambient or above ambient temperature.

The adsorption process may be controlled in the usual manner by infra-red carbon dioxide analysis and moisture analysis and means for control of alteration of the temperature, pressure, gas velocity and gas flow possibly coupled to suitable microprocessor equipment.

The invention will now be illustrated by means of the following Examples of which Example 1 is not according to the invention but is present for comparative purposes and Example 2 is according to the invention.

For these Examples a column 119cm inches long and of 2.54cm internal diameter was loaded with strontium exchanged zeolite X (95% exchange level) having a bead size of 1.4-2.0mm. The column was connected with an air compressor feed, a predrying vessel comprising 3A zeolite, moisture analysis means, infra-red $CO_2$ analysis means and flow measurement means. The conditions of operation were a temperature of 5°C, a pressure of 7.2 bars absolute, and a linear gas velocity through the bed of 16m/minute.

The following dynamic half column and full column performance parameters were measured.

$X_B$ Adsorption capacity at breakthrough (average weight % of $CO_2$ in the bed when $CO_2$ starts to issue therefrom).

$X_E$ Adsorption capacity at exhaustion (average weight % of $CO_2$ in bed when the concentration of $CO_2$ issuing from the bed is the same as in the feed.

MTZ Mass transfer zone

length of column (cms) over which adsorption is occurring at any moment.

The results for the strontium exchanged zeolite X described above and for sodium zeolite X are set out in the following Table. In both cases the zeolites were in theform of similar beads and were similarly fully ion-exchanged with the relevant cations.

### Dynamic Performance

| Ex. | Zeolite | MTZ cm | $X_B$ wt% | $X_E$ wt% | MTZ cm | $X_B$ wt% | $X_E$ wt% |
|-----|---------|--------|-----------|-----------|--------|-----------|-----------|
| 1 | NaX | 12.7 | 4.6 | 5.1 | 11.9 | 5.0 | 5.2 |
| 2 | SrX | 11.4 | 5.4 | 5.9 | 12.4 | 5.5 | 5.8 |

EP 0 294 588 A2

**Claims**

1. A process for the removal of carbon dioxide from a gas such as air or the constituents thereof, for example nitrogen or oxygen, or a gas containing the said constituents, comprising passing the carbon dioxide containing gas through a bed of an adsorbent capable of preferentially adsorbing the carbon dioxide characterised in that the adsorbent is zeolite X containing strontium cations.

2. A process as claimed in claim 1 wherein at least 70% of the cation exchange capacity of the zeolite X is satisfied by strontium cations.

3. A process as claimed in claim 1 or 2 wherein the adsorbent is in the form of beads or pellets.

4. A process as claimed in any preceding claim wherein the carbon dioxide-containing gas is dried before being passed through the adsorbent.

5. A process as claimed in claim 4 wherein the carbon dioxide-containing gas is dried by passing it through a body of zeolite A containing potassium cations.

6. A process as claimed in claim 5 wherein the temperature of the carbon dioxide-containing gas during the drying is from $10^{\circ}$C to $30^{\circ}$C.

7. A process as claimed in any preceding claim wherein the temperature of the carbon dioxide-containing gas during the carbon dioxide adsorption is from $0^{\circ}$C to $20^{\circ}$C.

8. A process as claimed in any preceding claim wherein the pressure of the carbon dioxide-containing gas during the adsorption of the carbon dioxide is from 2 bars to 40 bars absolute.

9. A process as claimed in any preceding claim wherein the linear velocity of the carbon dioxide-containing gas being passed through the zeolite X containing strontium cations is from 5m to 50m per minute.

10. A process as claimed in any preceding claim wherein the carbon dioxide-depleted gas produced is used as the feed for a cryogenic air separation plant.

4